# EUROPÄISCHE PATENTANMELDUNG

(11) **EP 1 107 410 A2**
(43) Veröffentlichungstag der Anmeldung: **13.06.2001**
(21) Anmeldenummer: 00125879.7
(22) Anmeldetag: 25.11.2000
(51) Int. Cl.: H02G 1/12

(54) **Verfahren zum Bearbeiten von mineral-isolierten Leitungen**

(30) Priorität: 07.12.1999 DE 19958763
(71) Anmelder: Heraeus Electro-Nite International N.V., 3530 Houthalen (BE)
(72) Erfinder: Neven, Lucas, 3700 Tongeren (BE)
(74) Vertreter: Kühn, Hans-Christian

(57) **Zusammenfassung**

Die Erfindung betrifft ein Verfahren zum Bearbeiten von mineral-isolierten Leitungen, insbesondere zum Abisolieren und/oder Trennen von mineral-isolierten Leitungen, wobei eine mineral-isolierte Leitung aus mindestens einem draht- oder bandförmigen elektrischen Leiter, einem mineralischen Pulver und einem metallischen Mantelrohr mit einer Wandstärke a gebildet ist. Es ergibt sich das Problem, ein im Hinblick auf die aus dem Stand der Technik bekannten Nachteile verbessertes Verfahren zur Bearbeitung von mineral-isolierten Leitungen bereitzustellen. Das Problem wird dadurch gelöst, dass das Mantelrohr auf mindestens einer radialen Bearbeitungslinie mittels Laserschneiden bearbeitet wird und dass ausgehend von der radialen Bearbeitungslinie das Mantelrohr auf mindestens einer axialen Bearbeitungslinie mittels Laserschneiden bearbeitet wird und dass anschließend die mineral-isolierte Leitung mittels Ultraschall behandelt wird.

## Beschreibung

Die Erfindung betrifft ein Verfahren zum Bearbeiten von mineral-isolierten Leitungen, insbesondere zum Abisolieren und/oder Trennen von mineral-isolierten Leitungen, wobei eine mineral-isolierte Leitung aus mindestens einem draht- oder bandförmigen elektrischen Leiter, einem mineralischen Pulver und einem metallischen Mantelrohr mit einer Wandstärke a gebildet ist.

Ein solches Verfahren, welches unter Zuhilfenahme einer rotierenden Trennscheibe durchgeführt wird, ist bekannt. Dabei durchschneidet eine Trennscheibe radial nach Möglichkeit nur das metallische Mantelrohr einer vorgefertigten, mineral-isolierten Leitung. WO 97/37391 beschreibt ein Verfahren zur Herstellung von mineral-isolierten Thermoelementen. Dabei wird ein metallisches Rohr auf eine vorherbestimmte Länge geschnitten und ein Ende des Rohres, beispielsweise durch Schweißen, verschlossen. Die aus unterschiedlichen Metallen gebildeten Thermoelement-Drähte werden unter Ausbildung einer Schmelzperle verbunden und nahe des verschlossenen Endes des metallischen Rohres angeordnet. Die Drahtenden werden parallel aus dem Rohr herausgeführt und der Zwischenraum zwischen Thermoelement-Drähten und dem Rohr zur Ausbildung einer elektrischen Isolierung mit Hilfe eines mineralischen Pulvers gefüllt. Anschließend wird der Durchmesser des so gefüllten metallischen Rohres vermindert.
GB 2 288 695 A beschreibt eine Vorrichtung, bevorzugt zum Abisolieren von mineral-isolierten Leitungen. Ein Ende einer bereits vorgefertigten mineral-isolierten Leitung wird dabei von verstellbaren Klemmbacken umschlossen. Anschließend wird eine Klinge zusammen mit den Klemmbacken um die Achse der mineralisolierten Leitung bewegt und dabei der Metallmantel durchtrennt.
Die zur Bearbeitung von vorgefertigten mineral-isolierten Leitungen genannten Verfahren verwenden entweder rotierende oder feststehende Schneiden, deren Eintauchtiefe in das metallische Mantelrohr mechanisch zugestellt beziehungsweise verändert wird. Dabei ist auch der Zustand der Schneide starken Alterungserscheinungen unterworfen, so dass die Veränderung der Eintauchtiefe auch aufgrund des Verschleißes erfolgen muss. Es besteht die Gefahr, dass bei diesen Verfahren einer der elektrischen Leiter im Inneren des metallischen Mantelrohres verletzt oder durchtrennt wird.

Es ergibt sich das Problem, ein im Hinblick auf die aus dem Stand der Technik bekannten Nachteile verbessertes Verfahren zur Bearbeitung von mineral-isolierten Leitungen bereitzustellen.

Das Problem wird dadurch gelöst, dass das Mantelrohr auf mindestens einer radialen Bearbeitungslinie mittels Laserschneiden bearbeitet wird und dass ausgehend von der radialen Bearbeitungslinie das Mantelrohr auf mindestens einer axialen Bearbeitungslinie mittels Laserschneiden bearbeitet wird und dass anschließend die mineral-isolierte Leitung mittels Ultraschall behandelt wird.
Dieses Verfahren ist insgesamt sehr kostengünstig und zur Bearbeitung hoher Stückzahlen geeignet. Ein Grund dafür ist im Laser selbst zu finden, der im Vergleich zu einer Trennscheibe oder Schneide eine um ein Vielfaches höhere Standzeit aufweist. Aufgrund der Tatsache, dass der Laser zudem ohne mechanischen Verschleiß arbeitet, ist die Eintauchtiefe des Laserlichts in das metallische Mantelrohr nach einer einmal vorgenommenen Einstellung, die darüber hinaus in sehr präziser Weise erfolgen kann, immer gleich. Damit ist auch ein gezieltes teilweises Durchtrennen oder ein Perforieren des Mantelrohres möglich. Das Verfahren eignet sich demnach zum Einbringen einer definierten Bruchlinie in das Mantelrohr, die anschließend mittels Ultraschall aufgebrochen werden kann. Es sind hohe Bearbeitungsgeschwindigkeiten erreichbar. Die Gefahr einer Beschädigung der elektrischen Leiter im Mantelrohr besteht bei dem erfindungsgemäßen Verfahren nicht.
Die Bearbeitungsgeschwindigkeit lässt sich noch steigern, wenn mehrere radial um die zu bearbeitende mineral-isolierte Leitung angeordnete Laser gleichzeitig zum Anbringen einer Radialen oder zwei axialen Bearbeitungslinien verwendet werden. So können beispielsweise in einem Winkel von 180° zueinander zwei Laser radial zu einer mineral-isolierten Leitung angeordnet werden. Diese beiden Laser sollten jeweils einen Winkel von 185° um die mineral-isolierte Leitung beschreiben können und während dessen das metallische Mantelrohr mit einer radialen Bearbeitungslinie versehen. Selbstverständlich kann dazu auch die mineral-isolierte Leitung selbst bewegt werden. Es ergibt sich eine radiale Bearbeitungslinie ohne Versatz. Die Verwendung von zwei Lasern führt nahezu zu einer Halbierung der Bearbeitungszeit beim Laserschneiden. Bei einer Verwendung von mehr als zwei Lasern können die Bearbeitungszeiten zwar noch verkürzt werden, allerdings steigen die Kosten für die Laserschneid-Vorrichtung mit jedem zusätzlichen Laser.
Besonders vorteilhaft ist es, wenn die Wandstärke a des Mantelrohres mittels Laserschneiden mindestens punktuell zu mindestens 50%, insbesondere zu 90%, vermindert wird.
Es hat sich insbesondere für den Anfang oder das Ende einer vorgefertigten mineral-isolierten Leitung bewährt, wenn das Mantelrohr mittels Laserschneiden nahe einem Ende des Mantelrohres mit einer radialen Bearbeitungslinie versehen wird, wenn das Mantelrohr mittels Laserschneiden zwischen der radialen Bearbeitungslinie und dem Ende des Mantelrohres mit zwei axialen Bearbeitungslinien versehen wird und wenn anschließend die mineral-isolierte Leitung mittels Ultraschall behandelt wird.

Zum Trennen einer mineral-isolierten Leitung hat es sich bewährt, wenn das Mantelrohr mittels Laserschneiden mit zwei zueinander beabstandeten radialen Bearbeitungslinien versehen wird, wenn das Mantelrohr zwischen den zwei radialen Bearbeitungslinien ausgehend von einer der radialen Bearbeitungslinien mit zwei axialen Bearbeitungslinien versehen wird und wenn anschließend die mineral-isolierte Leitung mittels Ultraschall behandelt wird.

Selbstverständlich ist auch das Anbringen von mehr als zwei axialen Bearbeitungslinien möglich, allerdings werden dadurch die Bearbeitungszeiten verlängert.

Mittels der Ultraschall-Behandlung der mineral-isolierten Leitung werden einerseits Teile des Mantelrohres, die durch die Bearbeitungslinien begrenzt sind, entfernt und andererseits das mineralische Pulver im Bereich dieser Teile des Mantelrohres entfernt.

Die Teile des Mantelrohres, die durch die Bearbeitungslinien begrenzt werden, werden bevorzugt als Halbschalen ausgebildet.

Nach der Behandlung der mineral-isolierten Leitung mittels Ultraschall können die freiliegenden elektrischen Leiter durchtrennt werden.

Dies kann durch alle bekannten Trennverfahren wie zum Beispiel mechanisch durch Schneiden oder thermisch durch Aufschmelzen erfolgen. Allerdings ist im Hinblick auf eine Fertigungsstraße das Durchtrennen mittels Laserschneiden vorteilhaft.

Die Figuren 1 bis 6 sollen das erfindungsgemäße Verfahren beispielhaft erläutern.
- Fig. 1: Mineral-isolierte Leitung mit zwei radialen und vier axialen Bearbeitungslinien
- Fig. 2: Mineral-isolierte Leitung gemäß Fig. 1 nach der Ultraschall-Behandlung
- Fig. 3: Mineral-isolierte Leitung gemäß Fig. 1 und Fig. 2 im Querschnitt
- Fig. 4: Mineral-isolierte Leitung mit zwei radialen und zwei axialen Bearbeitungslinien
- Fig. 5: Mineral-isolierte Leitung gemäß Fig. 4 nach der Ultraschall-Behandlung
- Fig. 6: Mineral-isolierte Leitung gemäß Fig. 5 nach Trennen der elektrischen Leiter

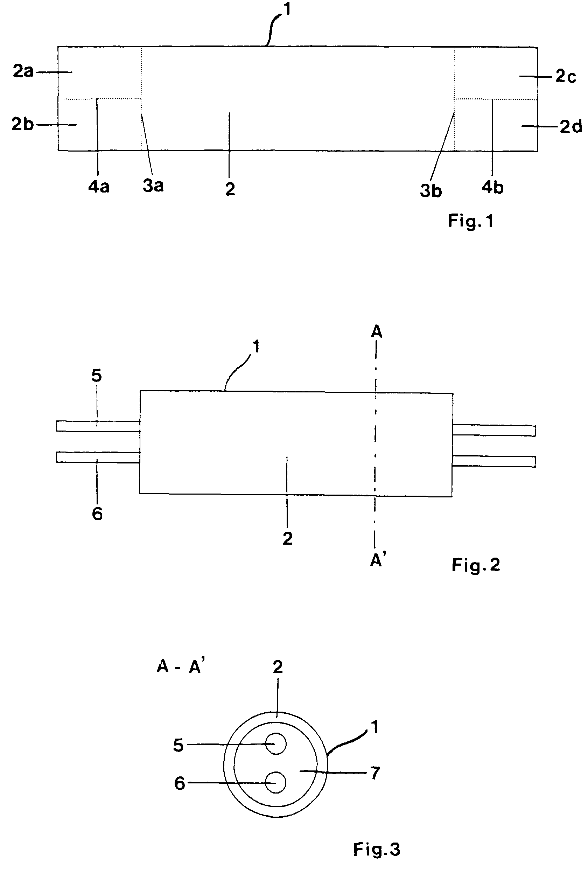

Fig. 1 zeigt eine mineral-isolierte Leitung 1 mit einem metallischen Mantelrohr 2. Das Mantelrohr 2 an den beiden Enden der mineral-isolierten Leitung 1 wird an seinem Umfang mittels Laserschneiden mit jeweils einer umlaufenden radialen Bearbeitungslinie 3a, 3b versehen. Jeweils zwei axiale Bearbeitungslinien werden gleichzeitig in einem Winkel von 180° mittels Laserschneiden auf dem Mantelrohr 2 zwischen einem Ende der mineral-isolierten Leitung und einer radialen Bearbeitungslinie 3a, 3b angeordnet. Von den insgesamt vier axialen Bearbeitungslinien sind in dieser Darstellung nur zwei axiale Bearbeitungslinien 4a, 4b erkennbar. Die beiden anderen axialen Bearbeitungslinien befinden sich nicht sichtbar auf der Rückseite der mineral-isolierten Leitung 1. An den beiden Enden der mineral-isolierten Leitung 1 werden durch die zwei axialen Bearbeitungslinien 4a, 4b sowie durch die zwei nicht sichtbaren axialen Bearbeitungslinien auf der Rückseite der mineral-isolierten Leitung 1 und durch die radialen Bearbeitungslinien 3a, 3b vier Halbschalen-förmige Teile 2a, 2b, 2c, 2d des Mantelrohres 2 umschlossen.

Fig. 2 zeigt die mineral-isolierte Leitung 1 gemäß Fig. 1 nach einer Behandlung mit Ultraschall. Die axialen und radialen Bearbeitungslinien wurden mittels Ultraschall aufgebrochen und die Halbschalen-förmigen Teile des Mantelrohres 2 entfernt. Das innerhalb der Halbschalen-förmigen Teile befindliche mineralische Pulver wurde gleichzeitig mittels Ultraschall entfernt. Die elektrischen Leiter 5, 6 ragen nun an beiden Enden über die mineral-isolierte Leitung 1 hinaus und können kontaktiert werden. Die beiden Enden der mineral-isolierten Leitung 1 können in bekannter Weise verschlossen werden. Dazu kann je nach Temperatureinsatzgebiet ein Ende beispielsweise durch ein Glaslot oder ein Epoxydharz verschlossen werden.

Fig. 3 zeigt einen Querschnitt A - A' durch die mineralisolierte Leitung 1 mit dem metallischen Mantelrohr 2, den zwei elektrischen Leitern 5, 6 und dem mineralischen Pulver 7. Als mineralisches Pulver kann beispielsweise MgO - Pulver verwendet werden.

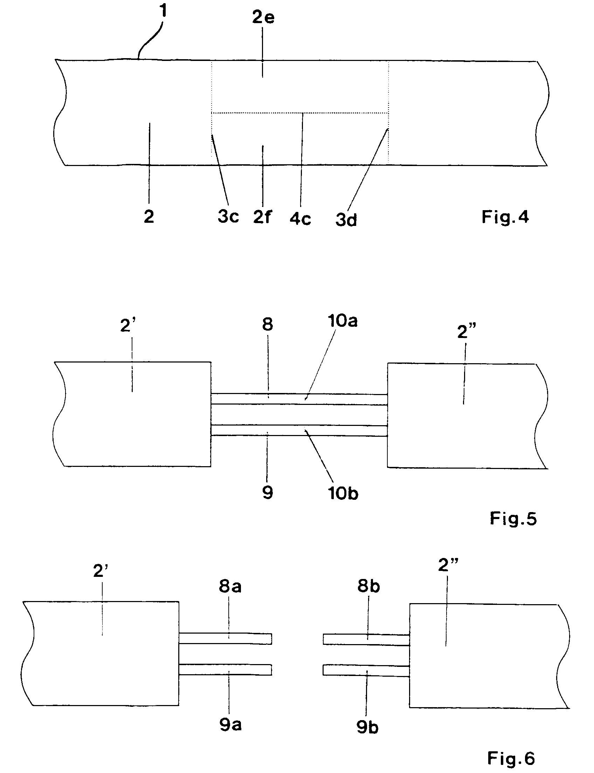

Fig. 4 zeigt eine mineral-isolierte Leitung 1 mit einem metallischen Mantelrohr 2. Das Mantelrohr 2 wird mittig an seinem Umfang mittels Laserschneiden mit zwei umlaufenden radialen Bearbeitungslinien 3c, 3d versehen. Zwei axiale Bearbeitungslinien werden gleichzeitig in einem Winkel von 180° mittels Laserschneiden auf dem Mantelrohr 2 zwischen den radialen Bearbeitungslinien 3c, 3d angeordnet. Von den zwei axialen Bearbeitungslinien ist in dieser Darstellung nur eine axiale Bearbeitungslinie 4c erkennbar. Die andere axiale Bearbeitungslinie befindet sich nicht sichtbar auf der Rückseite der mineral-isolierten Leitung 1. Die axiale Bearbeitungslinie 4c sowie die nicht sichtbare axiale Bearbeitungslinie auf der Rückseite der mineral-isolierten Leitung 1 und die radialen Bearbeitungslinien 3c, 3d umschließen zwei Halbschalen-förmige Teile 2e, 2f des Mantelrohres 2.

Fig. 5 zeigt die mineral-isolierte Leitung 1 gemäß Fig. 4 nach einer Behandlung mit Ultraschall. Die axialen und radialen Bearbeitungslinien wurden mittels Ultraschall aufgebrochen und die Halbschalen-förmigen Teile des Mantelrohres 2 entfernt. Das innerhalb der Halbschalen-förmigen Teile befindliche mineralische Pulver wurde gleichzeitig mittels Ultraschall entfernt. Das Mantelrohr ist nun in zwei Teile 2', 2" unterteilt und die elektrischen Leiter 8, 9 sind erkennbar. Zwei Laserschnitte10a, 10b trennen mittig die elektrischen Leiter 8, 9.

Fig. 6 zeigt die bereits mittels Laserschneiden getrennten elektrischen Leiter 8a, 8b, 9a, 9b, die nun kontaktiert werden können. Die Enden können vor oder nach dem Trennen der elektrischen Leiter in bekannter Weise verschlossen werden. Dazu kann je nach Temperatureinsatzgebiet ein Ende beispielsweise durch ein Glaslot oder ein Epoxydharz verschlossen werden.

## Patentansprüche

1. Verfahren zum Bearbeiten von mineral-isolierten Leitungen, insbesondere zum Abisolieren und/oder Trennen von mineral-isolierten Leitungen, wobei eine mineral-isolierte Leitung aus mindestens einem draht- oder bandförmigen elektrischen Leiter, einem mineralischen Pulver und einem metallischen Mantelrohr mit einer Wandstärke a gebildet ist, dadurch gekennzeichnet, dass das Mantelrohr auf mindestens einer radialen Bearbeitungslinie mittels Laserschneiden bearbeitet wird und dass ausgehend von der radialen Bearbeitungslinie das Mantelrohr auf mindestens einer axialen Bearbeitungslinie mittels Laserschneiden bearbeitet wird und dass anschließend die mineral-isolierte Leitung mittels Ultraschall behandelt wird.

2. Verfahren nach Anspruch 1, dadurch gekennzeichnet, dass die Wandstärke a des Mantelrohres mittels Laserschneiden mindestens punktuell zu mindestens 50% vermindert wird.

3. Verfahren nach Anspruch 2, dadurch gekennzeichnet, dass die Wandstärke a mittels Laserschneiden des Mantelrohres mindestens punktuell zu mindestens 90% vermindert wird.

4. Verfahren nach mindestens einem der Ansprüche 1 bis 3, dadurch gekennzeichnet, dass das Mantelrohr mittels Laserschneiden nahe einem Ende des Mantelrohres mit einer radialen Bearbeitungslinie versehen wird und dass das Mantelrohr mittels Laserschneiden zwischen der radialen Bearbeitungslinie und dem Ende des Mantelrohres mit zwei axialen Bearbeitungslinien versehen wird und dass anschließend die mineral-isolierte Leitung mittels Ultraschall behandelt wird.

5. Verfahren nach mindestens einem der Ansprüche 1 bis 3, dadurch gekennzeichnet, dass das Mantelrohr mittels Laserschneiden mit zwei zueinander beabstandeten radialen Bearbeitungslinien versehen wird und dass das Mantelrohr zwischen den zwei radialen Bearbeitungslinien ausgehend von einer der radialen Bearbeitungslinien mit zwei axialen Bearbeitungslinien versehen wird und dass anschließend die mineral-isolierte Leitung mittels Ultraschall behandelt wird.

6. Verfahren nach mindestens einem der Ansprüche 1 bis 5, dadurch gekennzeichnet, dass mittels der Ultraschall - Behandlung der mineral-isolierten Leitung einerseits Teile des Mantelrohres, die durch die Bearbeitungslinien begrenzt sind, entfernt werden und dass andererseits das mineralische Pulver im Bereich dieser Teile des Mantelrohres entfernt wird.

7. Verfahren nach Anspruch 6, dadurch gekennzeichnet, dass die Teile des Mantelrohres, die durch die Bearbeitungslinien begrenzt werden, als Halbschalen ausgebildet werden.

8. Verfahren nach mindestens einem der Ansprüche 1 bis 7, dadurch gekennzeichnet, dass nach Behandlung der mineral-isolierten Leitung mittels Ultraschall mindestens ein elektrischer Leiter durchtrennt wird.

9. Verfahren nach Anspruch 8, dadurch gekennzeichnet, dass das Durchtrennen mittels Laserschneiden erfolgt.
